# EUROPÄISCHE PATENTSCHRIFT

(11) **EP 1 621 369 B1**
(45) Veröffentlichungstag und Bekanntmachung des Hinweises auf die Patenterteilung: **17.10.2007**
(21) Anmeldenummer: 05016030.8
(22) Anmeldetag: 23.07.2005
(51) Int. Cl.: B60C 27/12

(54) **Spannvorrichtung für eine Gleitschutzkette**
Tensioning device for an anti-skid chain
Dispositif de tension pour chaînes à neige

(30) Priorität: 28.07.2004 DE 102004037332
(43) Veröffentlichungstag der Anmeldung: 01.02.2006
(73) Patentinhaber: RuD Ketten Rieger & Dietz GmbH u. Co. KG, 73432 Aalen (DE)
(72) Erfinder:
(74) Vertreter: Grünecker, Kinkeldey, Stockmair & Schwanhäusser Anwaltssozietät

(56) Entgegenhaltungen:
- EP-A- 0 835 770
- WO-A-20/04022364
- US-A1- 2003 102 065
- US-B1- 6 213 421
- US-B1- 6 619 353

## Beschreibung

Die Erfindung betrifft eine Spannvorrichtung für das Kettennetz einer Gleitschutzkette mit einem Spannstrang, dessen eines Ende mit einer in einem Gehäuse gelagerten Aufwickel-Rolle verbunden ist, die unter der Einwirkung einer als Spannfeder für den Spannstrang dienenden Spiralfeder steht, und mit einem zur Arretierung und Freigabe des aus dem Gehäuse ziehbaren Spannstranges dienenden, durch den Benutzer der Vorrichtung betätigbaren Blockierorgan.

Spannvorrichtungen der vorstehenden Art sind aus der EP 0 255 119 A2, der WO 98/39168 und der WO 2004/022364 A1 bekannt. Um mit ihrer Hilfe eine gleichmäßige Spannung des Netzes einer Gleitschutzkette zu erreichen, bedarf es wie im Falle der Lösung nach der EP 0 255 119 A2 entweder eines sich über den gesamten Umfang der Flanke eines Fahrzeugreifens erstreckenden, in Haken eingehängten, vergleichsweise langen, die äußere Halterung bildenden Spannstranges oder aber wie im Falle der äußere Halterungen mit Seitenkettenabschnitten aufweisenden Lösungen nach der WO 98/39168 und der WO 2004/022364 A1 des Einsatzes zweier Spannvorrichtungen.

Eine gattungsgemäße Spannvorrichtung ist aus der US-B1-6619353 bekannt.

Der Erfindung liegt die Aufgabe zugrunde, eine Spannvorrichtung der in Betracht gezogenen Art zu schaffen, die auch beim Einsatz in Verbindung mit Gleitschutzketten, deren äußere Halterung Seitenketten oder Seitenkettenabschnitte aufweist, ein gleichmäßiges Spannen des Kettennetzes mit nur einer Spannvorrichtung ermöglicht. Gelöst wird die vorstehende Aufgabe erfindungsgemäß durch, die Merkmale des Anspruchs 1.

Die erfindungsgemäße Spannvorrichtung erspart dem Benutzer der mit ihr versehenen Gleitschutzkette bei der Montage und Demontage der Kette das Operieren mit zwei Spannvorrichtungen, ohne dass die Spannungsverteilung im Kettennetz eine Beeinträchtigung erfährt.

Als besonders vorteilhaft erweist es sich, wenn die zueinander versetzte Achsen aufweisenden Rollen zum Aufwickeln der Spannstränge über Zahnräder miteinander in Verbindung stehen und die die Aufwickel-Rollen miteinander verbindenden Zahnräder zur Realisierung unterschiedlicher Ausziehlängen der Spannstränge unterschiedliche Zähnezahlen aufweisen. Durch die getriebemäßige Verknüpfung der beiden Rollen kommt man nicht nur mit einer einzigen Spiralfeder für beide Rollen aus, sondern hat man auch die Möglichkeit, bei Gleitschutzketten mit geteiltem Kettennetz während der Montage der Ketten den Verhältnissen im Bereich der Bodenaufstandsfläche Rechnung zu tragen, indem man den längeren Spannstrang zur Überbrückung des im Bodenbereich größeren Abstandes zwischen den Enden der Seitenkette bzw. der Seitenkettenabschnitte nutzt.

Die Handhabung der neuen Spannvorrichtung wird erleichtert, wenn die zweite Aufwickel-Rolle mit einem Ritzel versehen ist, das mit Zähnen eines vorzugsweise eine Innenverzahnung aufweisenden Zahnrades eines Koppelgetriebes kämmt, und wenn in das Zahnrad des Koppelgetriebes durch einen Spannhebel eine zum Spannen der Spiralfeder dienende Schwenkbewegung einleitbar ist. Gleichzeitig lassen sich durch das Koppelgetriebe die Ausziehwege der Spannstränge begrenzen.

Weitere Merkmale und Einzelheiten der erfindungsgemäßen Spannvorrichtung ergeben sich aus den Unteransprüchen und der nachstehenden Beschreibung einer in den beigefügten Zeichnungen dargestellten besonders vorteilhaften Ausführungsform der Erfindung. Es zeigen:
- Fig. 1: die mit einer Spannvorrichtung versehene äußere Halterung einer Gleitschutzkette,
- Fig. 2: die innere Halterung der Gleitschutzkette gemäß Fig. 1,
- Fig. 3: eine Explosionsdarstellung der in Fig. 1 gezeigten Spannvorrichtung,
- Fig. 4: eine erste Frontansicht der Spannvorrichtung bei abgenommenem Gehäusedeckel,
- Fig. 5: eine zweite Frontansicht der Spannvorrichtung bei abgenommenem Gehäusedeckel und einer zusätzlich entfernten Führungskulisse und
- Fig. 6: eine dritte Frontansicht der Spannvorrichtung bei abgenommenem Gehäusedeckel.

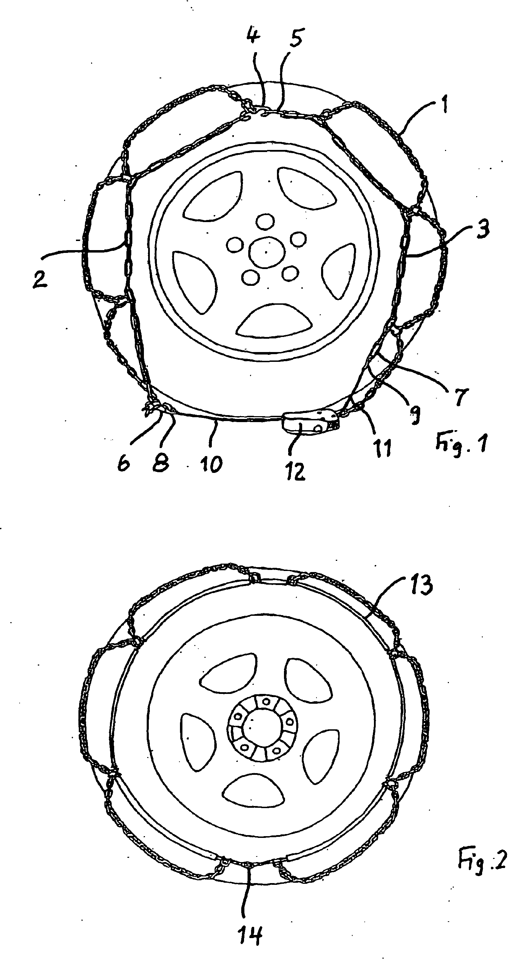

In den Figuren 1 und 2 ist mit 1 das Netz einer Gleitschutzkette bezeichnet, deren äußere Halterung aus zwei Seitenkettenabschnitten 2 und 3 besteht. Die Enden der Seitenkettenabschnitte 2, 3 sind einerseits durch einen Haken 4 und eine Öse 5 und andererseits durch Haken 6, 7 und zwei an ihren Enden mit Ösen 8, 9 versehene, aus Drahtseilen bestehende Spannstränge 10, 11 einer Spannvorrichtung 12 miteinander verbunden. Die innere Halterung 13 der Gleitschutzkette wird von einem ummantelten Drahtseil gebildet, dessen Enden mittels eines Verschlusses 14 miteinander verbunden sind. Figur 1 lässt erkennen, dass der während der Montage der Gleitschutzkette im Bereich der Bodenaufstandsfläche des Fahrzeugreifens gelegene Spannstrang 10 länger als der Spannstrang 11 der Spannvorrichtung 12 ist. In der Praxis ist die Länge des Spannstranges 10 etwa 75 % größer als die Länge des Spannstranges 11.

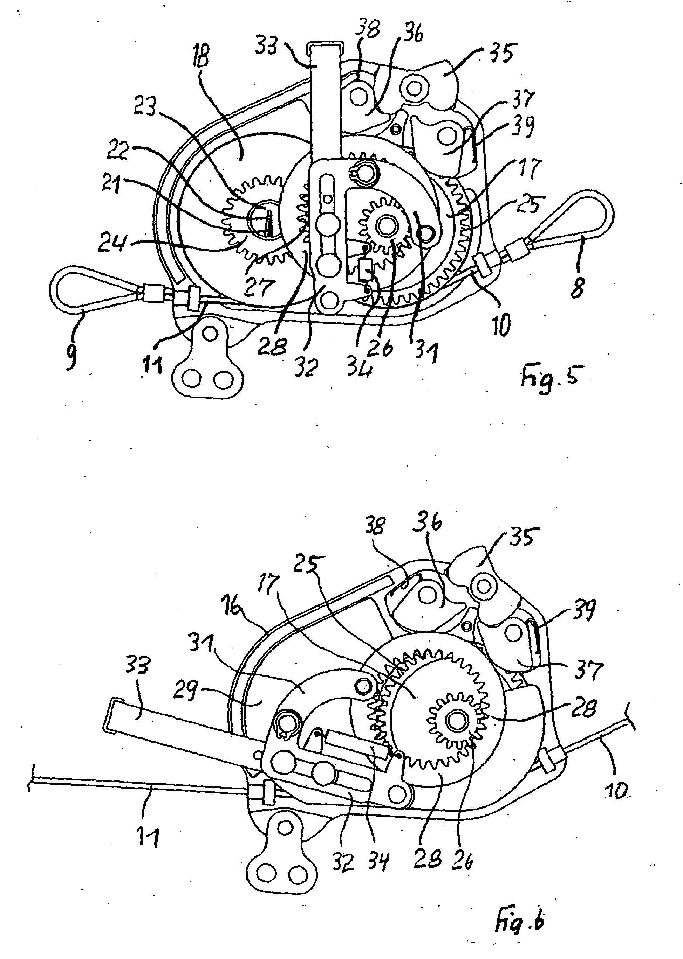

Die Spannvorrichtung 12 besitzt ein durch einen Deckel 15 verschließbares Gehäuse 16 mit Lagern für zwei Rollen 17, 18, auf die die Spannstränge 10, 11 aufwickelbar sind. Im Innern der Rolle 18 ist eine Spiralfeder 19 untergebracht, deren eines Ende 20 im Innern der Rolle 18 und deren anderes Ende 21 in einem Schlitz 22 eines Lagerzapfens 23 für die Rolle 18 befestigt ist. Die Rolle 18 weist auf ihrer der Rolle 17 zugewandten Seite ein über einen hohlen Zapfen mit ihr verbundenes Ritzel 24 auf, das mit einem Zahnkranz 25 kämmt, der ein Stück mit der Rolle 17 bildet. Die Rolle 17 ist ähnlich wie die Rolle 18 mit einem Ritzel 16 ausgestattet, dessen Zähne in die Innenverzahnung 27 eines Zahnrades 28 greifen, das in einer Kulisse 29 geführt ist. Mit einem Zapfen 30 an einer der Stirnseiten des innenverzahnten Rades 28 ist der Lenker 31 eines Koppelgetriebes verbunden, über den mit Hilfe eines aus zwei zueinander verschiebbaren Teilen 32, 33 bestehenden Spannhebels eine Schwenkbewegung in das Zahnrad 28 einleitbar ist. Durch eine Schwenkbewegung von etwa 180°, d. h. durch die Überführung des Schwenkhebels 32, 33 aus der in den Figuren 4 und 5 gezeigten Position in die in Figur 6 dargestellte Position wird die Spiralfeder 19 gespannt und gleichzeitig werden die Spannstränge 10 und 11 aus dem Gehäuse 16 herausbewegt.

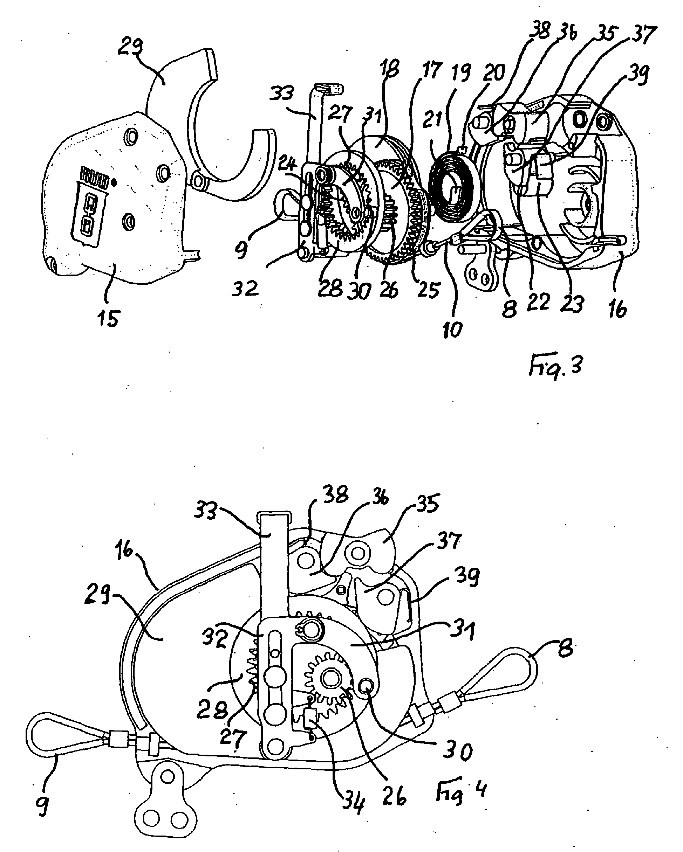

Die zweiteilige Ausbildung des Spannhebels 32, 33 erlaubt es dem Benutzer beim Spannen der Spiralfeder 19 den Hebelarm zur Erleichterung des Spannvorganges zu vergrößern. Sobald der Spannvorgang beendet ist, wird der ausziehbare Teil 33 aus der in Figur 6 gezeigten Position automatisch durch eine Feder 34 in seine in den Figuren 3 - 5 dargestellte Ausgangsposition zurückbewegt.

Ein aus einem nach Art einer Wippe ausgebildeten, zweiarmigen Kipphebel 35 sowie einem Blockierorgan 36 und einem Bremsorgan 37 bestehendes Gesperre verhindert eine unerwünschte Freigabe der gespannten Spiralfeder 19. Dies geschieht dadurch, dass das unter der Einwirkung einer Feder 38 gegen die Umfangsfläche des Zahnrades 28 gedrückte Blockierorgan 36 beim Loslassen des Spannhebels 32, 33 aufgrund eines durch seine Kontur bedingten Selbsthemmungseffektes eine Rückdrehung des Zahnrades 28 im Uhrzeigersinn verhindert, solange der Kipphebel 35 die in Figur 6 gezeigte Position einnimmt, in der er das unter der Einwirkung einer Feder 39 stehende Bremsorgan 37 im Abstand vom Umfang des Zahnrades 28 hält.

Sobald die Ösen 8, 9 der Spannstränge 10, 11 in die Haken 6, 7 der Seitenkettenabschnitte 2, 3 der äußeren Halterung einhängt sind, überführt der Benutzer der Gleitschutzkette den Kipphebel 35 in die in Figur 4 und 5 gezeigte Position und hebt auf diese Weise die Blockierung des Zahnrades 28 durch das Blockierorgan 36 auf. Die Spiralfeder 19 leitet nunmehr eine Zugkraft in die Spannstränge 10, 11 ein und die äußere Halterung 2, 3 wird gespannt. Während des Einziehens der Spannstränge 10, 11 drückt die Feder 39 das Bremsorgan 37 gegen den Umfang des Zahnrades 28. Auf diese Weise wird ein schlagartiger Einzug der Spannstränge 10, 11 in das Gehäuse 16 vermieden. Ein schlagartiger Einzug ist nicht zuletzt deshalb unerwünscht, weil er bei einer Fehlbedienung der Spannvorrichtung, d. h. bei einer versehentlichen Betätigung des Kipphebels 35, bevor die Ösen 8, 9 der Spannstränge 10, 11 in die Haken 6, 7 der Seitenkettenabschnitte 2, 3 der äußeren Halterung eingehängt sind, zu Verletzungen des Benutzers der Spannvorrichtung führen könnte.

## Patentansprüche

1. Spannvorrichtung zum Verbinden der im Bereich der Bodenaufstandsfläche eines Fahrzugreifens gelegenen Enden zweier, die äußere Halterung des Kettennetzes (1) einer Gleitschutzkette bildender Seitenkettenabschnitte (2, 3) mit Hilfe eines Spannstranges (11), dessen eines Ende mit einer im Gehäuse (16) der Spannvorrichtung gelagerten Aufwickelrolle (18) verbunden ist, die unter der Einwirkung einer zum Spannen des Spannstranges (11) dienenden Spiralfeder (19) steht, und dessen anderes Ende mit einem Ende des einen Seitenkettenabschnittes (2) verbindbar ist, wobei zur Arretierung und Freigabe des aus dem Gehäuse (16) ziehbaren Spannstranges (11) ein durch den Benutzer der Vorrichtung betätigbares Blockierorgan (36) vorgesehen ist, **dadurch gekennzeichnet, dass** im Gehäuse (16) eine zusätzliche Rolle (17) zum Aufwickeln eines zweiten Spannstranges (10) gelagert ist, der sich in zur Ausziehrichtung des ersten Spannstranges (11) entgegengesetzter Richtung um einen Betrag aus dem Gehäuse (16) ziehen lässt, der sich von der Ausziehlänge des anderen Spannstranges (11) unterscheidet und dessen aus dem Gehäuse (16) gezogenes Ende mit einem Ende des anderen Seitenkettenabschnittes (3) verbindbar ist.

2. Vorrichtung nach Anspruch 1, **dadurch gekennzeichnet, dass** die zueinander versetzte Achsen aufweisenden Aufwickel-Rollen (17, 18) über Zahnräder miteinander in Verbindung stehen.

3. Vorrichtung nach Anspruch 2, **dadurch gekennzeichnet, dass** die die Aufwickel-Rollen (17, 18) miteinander verbindenden Zahnräder (24, 25) zur Realisierung unterschiedlicher Ausziehlängen der Spannstränge (10, 11) unterschiedliche Zähnezahlen aufweisen.

4. Vorrichtung nach einem der Ansprüche 2 oder 3, **dadurch gekennzeichnet, dass** beide Aufwickel-Rollen (17, 18) durch eine gemeinsame Spiralfeder (19) spannbar sind.

5. Vorrichtung nach einem der Ansprüche 1 bis 4, **dadurch gekennzeichnet, dass** die Spannstränge (10, 11) von Drahtseilen gebildet werden.

6. Vorrichtung nach einem der Ansprüche 1 bis 5, **dadurch gekennzeichnet, dass** die zweite Aufwickel-Rolle (17) mit einem Ritzel (26) versehen ist, das mit Zähnen eines Zahnrades (28) eines Koppelgetriebes (28, 31 - 34) kämmt.

7. Vorrichtung nach Anspruch 6, **dadurch gekennzeichnet, dass** das Zahnrad des Koppelgetriebes (28, 31 - 34) eine Innenverzahnung (27) aufweist.

8. Vorrichtung nach Anspruch 7, **dadurch gekennzeichnet, dass** in das Zahnrad (28) des Koppelgetriebes durch einen Spannhebel (32, 33) eine zum Spannen der Spiralfeder (19) dienende Schwenkbewegung einleitbar ist.

9. Vorrichtung nach Anspruch 8, **dadurch gekennzeichnet, dass** der Spannhebel (32, 33) über einen Lenker (31) mit dem Zahnrad (28) des Koppelgetriebes verbunden ist.

10. Vorrichtung nach einem der Ansprüche 8 oder 9, **dadurch gekennzeichnet, dass** der Spannhebel (32, 33) aus zwei in Richtung seiner Längsachse zueinander verschiebbaren Teilen (32, 33) besteht.

11. Vorrichtung nach einem der Ansprüche 6 bis 10, **dadurch gekennzeichnet, dass** die Ausziehwege der Spannstränge (10, 11) durch das Koppelgetriebe (28, 31 - 34) begrenzt werden.

12. Vorrichtung nach einem der Ansprüche 1 bis 11, **dadurch gekennzeichnet, dass** sie zusätzlich zum Blockierorgan (36) mit einem Bremsorgan (37) ausgestattet ist.

13. Vorrichtung nach Anspruch 12, **dadurch gekennzeichnet, dass** ein zum Betätigen des Blockierorganes (36) dienender Kipphebel (35) zwei Arme aufweist, von denen einer zum Lösen des Blockierorganes (36) und einer zum Betätigen eines Bremsorganes (37) dient.

14. Vorrichtung nach Anspruch 13, **dadurch gekennzeichnet, dass** das Blockierorgan (36) und das Bremsorgan (37) durch Federn (38, 39) gegen den Umfang des mit der Innenverzahnung (27) versehenen Zahnrades (28) drückbar sind.

## Claims

1. Tensioning device for connecting the ends, located in the region of the ground contact area of a vehicle tyre, of two side chain sections (2, 3) forming the outer support of the chain net (1) of an anti-skid chain, by means of a tensioning section (11) of which one end is connected to a winding roller (18) which is mounted in the housing (16) of the tensioning device, which is under the influence of a spiral spring (19) serving to tension the tensioning section (11), and of which the other end can be connected to one end of one side chain section (2), wherein a blocking member (36) which can be actuated by the user of the device being provided for blocking and releasing of the tensioning section (11) which can be pulled out of the housing (16), **characterised in that** in the housing (16) an additional roller (17) is mounted for winding up a second tensioning section (10) which can be pulled out of the housing (16) in the direction opposite the pull-out direction of the first tensioning section (11) by an amount which differs from the pull-out length of the other tensioning section (11) and of which the end pulled out of the housing (16) can be connected to one end of the other side chain section (3).

2. Device according to claim 1, **characterised in that** the winding rollers (17, 18), which have axes offset from each other, are connected to each other by gears.

3. Device according to claim 2, **characterised in that** the gears (24, 25), which connect the winding rollers (17, 18) to each other, have different numbers of teeth for producing different pull-out lengths of the tensioning sections (10, 11).

4. Device according to either of claims 2 or 3, **characterised in that** the two winding rollers (17, 18) can be tensioned by a common spiral spring (19).

5. Device according to any of claims 1 to 4, **characterised in that** the tensioning sections (10, 11) are formed by wire cables.

6. Device according to any of claims 1 to 5, **characterised in that** the second winding roller (17) is provided with a pinion (26) which meshes with teeth of a gear (28) of a coupler mechanism (28, 31-34).

7. Device according to claim 6, **characterised in that** the gear of the coupler mechanism (28, 31-34) has an internal tooth system (27).

8. Device according to claim 7, **characterised in that** a pivot movement which serves to tension the spiral spring (19) can be applied to the gear (28) of the coupler mechanism by a tensioning lever (32, 33).

9. Device according to claim 8, **characterised in that** the tensioning lever (32, 33) is connected by a control arm (31) to the gear (28) of the coupler mechanism.

10. Device according to either of claims 8 or 9, **characterised in that** the tensioning lever (32, 33) consists of two portions (32, 33) displaceable relative to each other in the direction of its longitudinal axis.

11. Device according to any of claims 6 to 10, **characterised in that** the pull-out distances of the tensioning sections (10, 11) are limited by the coupler mechanism (28, 31-34).

12. Device according to any of claims 1 to 11, **characterised in that**, in addition to the blocking member (36), it is fitted with a braking member (37).

13. Device according to claim 12, **characterised in that** a rocker (35) which serves to actuate the blocking member (36) has two arms, one of which serves to release the blocking member (36) and one to actuate a braking member (37).

14. Device according to claim 13, **characterised in that** the blocking member (36) and the braking member (37) can be forced by springs (38, 39) towards the circumference of the gear (28) provided with the internal tooth system (27).

## Revendications

1. Dispositif de tension pour l'assemblage des extrémités, situées dans la zone de contact au sol d'un pneu de véhicule, de deux tronçons latéraux de chaîne (2, 3), formant le crochet extérieur du réseau de chaîne (1) d'une chaîne antidérapante, au moyen d'un tronçon de tension (11) dont une extrémité est reliée à une bobine d'enroulement (18), qui est montée dans le boîtier (16) du dispositif de tension, qui est soumise à l'action d'un ressort spiral (19) destiné à tendre le tronçon de tension (11), et dont l'autre extrémité peut être assemblée à une extrémité de l'un des tronçons latéraux de chaîne (2), un organe de blocage (36), destiné à être actionné par l'utilisateur du dispositif, étant prévu pour bloquer et libérer le tronçon de tension (11) pouvant être tiré hors du boîtier (16), **caractérisé en ce qu'**une bobine (17) supplémentaire est logée dans le boîtier (16) pour l'enroulement d'un deuxième tronçon de tension (10) qui peut être tiré hors du boîtier (16) dans le sens opposé au sens de déroulement du premier tronçon de tension (11) sur une distance différente de la longueur de déroulement de l'autre tronçon de tension (11), et dont l'extrémité tirée hors du boîtier (16) peut être assemblée à une extrémité de l'autre tronçon latéral de chaîne (3).

2. Dispositif selon la revendication 1, **caractérisé en ce que** les bobines d'enroulement (17, 18), ayant des axes décalés entre eux, sont en liaison l'une avec l'autre par l'intermédiaire de roues dentées.

3. Dispositif selon la revendication 2, **caractérisé en ce que** les roues dentées (24, 25), reliant les bobines d'enroulement (17, 18) l'une à l'autre, comportent des nombres de dents différents en vue de réaliser différentes longueurs d'extraction des tronçons de tension (10, 11).

4. Dispositif selon la revendication 2 ou 3, **caractérisé en ce que** les deux bobines d'enroulement (17, 18) peuvent être tendues par un ressort spiral (19) commun.

5. Dispositif selon l'une quelconque des revendications 1 à 4, **caractérisé en ce que** les tronçons de tension (10, 11) sont formés par des câbles métalliques.

6. Dispositif selon l'une quelconque des revendications 1 à 5, **caractérisé en ce que** la deuxième bobine d'enroulement (17) est munie d'un pignon (26), qui engrène avec des dents d'une roue dentée (28) d'un engrenage d'accouplement (28, 31 - 34).

7. Dispositif selon la revendication 6, **caractérisé en ce que** la roue dentée (28) de l'engrenage d'accouplement (28, 31 - 34) comporte une denture intérieure (27).

8. Dispositif selon la revendication 7, **caractérisé en ce qu'**un mouvement de pivotement destiné à tendre le ressort spiral (19) est introduit par l'intermédiaire d'un levier de tension (32, 33) dans la roue dentée (28) de l'engrenage d'accouplement.

9. Dispositif selon la revendication 8, **caractérisé en ce que** le levier de tension (32, 33) est assemblé par l'intermédiaire d'une bielle (31) à la roue dentée (28) de l'engrenage d'accouplement.

10. Dispositif selon la revendication 8 ou 9, **caractérisé en ce que** le levier de tension (32, 33) est formé par deux parties (32, 33) aptes à coulisser l'une par rapport à l'autre dans la direction de son axe longitudinal.

11. Dispositif selon l'une quelconque des revendications 6 à 10, **caractérisé en ce que** les distances d'extraction des tronçons de tension (10, 11) sont limitées par l'engrenage d'accouplement (28, 31 - 34).

12. Dispositif selon l'une quelconque des revendications 1 à 11, **caractérisé en ce que**, en plus de l'organe de blocage (36), il est muni d'un organe de freinage (37).

13. Dispositif selon la revendication 12, **caractérisé en ce qu'**un levier de basculement (35), destiné à actionner l'organe de blocage (36), comporte deux bras, dont l'un est destiné à débloquer l'organe de blocage (36) et l'autre est destiné à actionner l'organe de freinage (37).

14. Dispositif selon la revendication 13, **caractérisé en ce que** l'organe de blocage (36) et l'organe de freinage (37) peuvent être pressés par des ressorts (38, 39) contre le pourtour de la roue dentée (28) munie de la denture intérieure (27).
